# EUROPÄISCHE PATENTANMELDUNG

(11) **EP 3 486 097 A1**
(43) Veröffentlichungstag der Anmeldung: **22.05.2019**
(21) Anmeldenummer: 18189911.3
(22) Anmeldetag: 21.08.2018
(51) Int. Cl.: B60D 1/30, A01B 69/00, B62D 15/02, B62D 6/00, B60D 1/62

(54) **VORRICHTUNG ZUR KNICKWINKELÜBERWACHUNG**

(30) Priorität: 17.11.2017 DE 102017127100
(71) Anmelder: MAN Truck & Bus AG, 80995 München (DE)
(72) Erfinder: Karacan, Sertac, 80637 München (DE); Huber, Maximilian, 80804 München (DE); Roth, Josef, 86561 Aresing (DE)
(74) Vertreter: v. Bezold & Partner Patentanwälte - PartG mbB

(57) **Zusammenfassung**

Die Erfindung betrifft eine Vorrichtung (22) zum Überwachen eines Knickwinkels (β) zwischen einem ersten Fahrzeugwagen (12) und einem zweiten Fahrzeugwagen (14) eines Kraftfahrzeugs (10), insbesondere eines Nutzfahrzeugs. Die Vorrichtung (22) weist eine Einrichtung (18), insbesondere einen Winkelsensor, zum Ermitteln und/oder Erfassen des Knickwinkels (β) zwischen dem ersten Fahrzeugwagen (12) und dem zweiten Fahrzeugwagen (14) auf. Die Vorrichtung (22) weist eine Warnvorrichtung (20) auf, die dazu ausgebildet ist, ein Warnsignal auszugeben, das in Abhängigkeit von einer Größe des ermittelten und/oder erfassten Knickwinkels (β) veränderlich ist. Das veränderliche Warnsignal wird nur innerhalb eines vorbestimmten Maximalknickwinkelbereichs (M) ausgegeben. Mittels des veränderlichen Warnsignals kann der Fahrer des Kraftfahrzeugs (10) innerhalb des Maximalknickwinkelbereichs (M) auf eine Veränderung des Knickwinkels (β) und eine Annäherung an einen Endanschlag (24, 26) hingewiesen werden.

## Beschreibung

Die Erfindung betrifft eine Vorrichtung zum Überwachen eines Knickwinkels zwischen einem ersten Fahrzeugwagen und einem zweiten Fahrzeugwagen eines Kraftfahrzeugs.

Omnibusse können beispielsweise als Gelenkbusse oder als Busanhängerzüge vorgesehen sein. Bei diesen Omnibussen ist ein erster Fahrzeugwagen gelenkig mit einem zweiten Fahrzeugwagen verbunden. Die gelenkige Verbindung wird über ein Drehgelenk realisiert. Ein solches Drehgelenk weist mechanische Endanschläge auf, die den Knickwinkel zwischen dem ersten Fahrzeugwagen und dem zweiten Fahrzeugwagen begrenzen. Wird der Omnibus während der Fahrt so gelenkt, dass zu schnell in einen der Endanschläge gefahren wird, werden die betroffenen Bauteile, d. h. insbesondere das Drehgelenk, stark belastet. Zusätzlich kann der Kontakt mit einem Endanschlag von Fahrgästen des Omnibusses als unangenehm wahrgenommen werden. Es ist auch möglich, dass das Kraftfahrzeug bei Kontakt mit dem Endanschlag automatisch gebremst wird.

Die US 2014/0324295 A1 offenbart ein Überwachungssystem und -verfahren für einen Kupplungswinkel zwischen einem Personenkraftwagen mit Anhängerkupplung und einem mit der Anhängerkupplung verbundenen Anhänger für eine Rückwärtsfahrt des Gespanns. Ein aufgenommenes Bild der Anhängerkupplung wird mit einer eingeblendeten Anhängerwinkelpositionsgrenze überlagert und angezeigt. Wenn sich ein aktueller Kupplungswinkel der Anhängerwinkelpositionsgrenze nähert, diese erreicht oder überschreitet wird ein statisches Warnsignal erzeugt.

Der Erfindung liegt die Aufgabe zu Grunde, eine alternative oder verbesserte Vorrichtung zur Knickwinkelüberwachung insbesondere für Omnibusse und Lastkraftwagen bereitzustellen.

Die Aufgabe wird gelöst durch eine Vorrichtung gemäß dem unabhängigen Anspruch. Vorteilhafte Weiterbildungen sind in den abhängigen Ansprüchen und der Beschreibung angegeben.

Die Vorrichtung ist zum Überwachen eines Knickwinkels zwischen einem ersten Fahrzeugwagen und einem zweiten Fahrzeugwagen eines Kraftfahrzeugs, insbesondere eines Nutzfahrzeugs, geeignet. Die Vorrichtung weist eine Einrichtung, insbesondere einen Winkelsensor, zum Ermitteln und/oder Erfassen des Knickwinkels zwischen dem ersten Fahrzeugwagen und dem zweiten Fahrzeugwagen auf. Die Vorrichtung weist eine Warnvorrichtung auf, die dazu ausgebildet ist, ein Warnsignal auszugeben, das in Abhängigkeit von einer Größe des ermittelten und/oder erfassten Knickwinkels veränderlich ist. Das veränderliche Warnsignal wird nur innerhalb eines vorbestimmten Maximalknickwinkelbereichs ausgegeben.

Im Gegensatz zu einem starren Warnsignal ermöglicht ein veränderliches Warnsignal, dass der Fahrer des Kraftfahrzeugs über eine Veränderung des Warnsignals hinsichtlich einer Veränderung des Knickwinkels hingewiesen wird. Beispielsweise kann der Fahrer durch Veränderung des Warnsignals darauf hingewiesen werden, dass sich ein Drehgelenk des Kraftfahrzeugs einem Endanschlag des Kraftfahrzeugs annähert. Dies kann insbesondere bei Lastkraftwagen und Omnibussen hilfreich sein. Dem Fahrer wird damit die Möglichkeit gegeben, eine Geschwindigkeit des Kraftfahrzeugs besser einzustellen, damit nicht oder nicht zu schnell gegen den Endanschlag gefahren wird. Hierdurch kann eine Belastung der Bauteile gesenkt werden. Ferner kann der Fahrer des Kraftfahrzeugs erkennen, wann das Kraftfahrzeug den minimalen Wendekreis erreicht hat. Insbesondere bei Omnibussen wird das Erreichen der mechanischen Endanschläge des Drehgelenks von den Fahrgästen als unangenehm wahrgenommen. Unter Zuhilfenahme der Warnvorrichtung kann der Fahrer des Kraftfahrzeugs einen Kontakt mit den Endanschlägen besser vermeiden.

Da das veränderliche Warnsignal nur in einem vorbestimmten Maximalknickwinkelbereich ausgegeben wird, kann der Fahre des Kraftfahrzeugs bspw. nur im relevanten Bereich vor den Endanschlägen durch das veränderliche Warnsignal gewarnt werden. Dadurch wird verhindert, dass der Fahrer durch ständige Information über den Knickwinkel seine Aufmerksamkeit nicht länger dem Knickwinkel widmet. Stattdessen wird die Aufmerksamkeit des Fahrers nur wenn erforderlich, d.h. nur im Maximalknickwinkelbereich, auf die Beachtung des Knickwinkel gelenkt.

Die Warnvorrichtung kann als separate Vorrichtung nur zum Warnen hinsichtlich des Knickwinkels ausgebildet sein. Es ist allerdings auch möglich, dass die Warnvorrichtung ferner zum Ausgeben von weiteren anderen Warnungen (z.B. eine Türschließwarnung) ausgebildet ist. Die Warnvorrichtung kann ferner in ein bestehendes Warnsystem integriert werden.

Insbesondere kann die Warnvorrichtung dazu ausgebildet sein, ein veränderliches akustisches, visuelles und/oder haptisches Warnsignal auszugeben.

In einem besonders bevorzugten Ausführungsbeispiel nimmt eine Intensität des veränderlichen Warnsignals bei Zunahme der Größe des ermittelten und/oder erfassten Knickwinkels zu. Damit kann bei zunehmendem Knickwinkel und somit bei Annäherung an einen Endanschlag die Aufmerksamkeit des Fahrers durch Intensitätserhöhung des veränderlichen Warnsignals auf den bevorstehenden Kontakt mit dem Endanschlag gelenkt werden. Eine geringe Intensität des veränderlichen Warnsignals weist den Fahrer hingegen darauf hin, dass noch ein wenig Platz bzw. Abstand vorhanden ist, bevor bspw. die mechanischen Endanschläge berührt werden.

Insbesondere kann die Intensität des veränderlichen Warnsignals bei Zunahme der Größe des ermittelten und/oder erfassten Knickwinkels linear, progressiv oder degressiv zunehmen. Eine lineare Veränderung kann dem Fahrer ermöglichen, den noch zur Verfügung stehenden Abstand zum Endanschlag besser einschätzen zu können. Eine progressive Veränderung kann eine Aufmerksamkeit des Fahrers gegenüber dem Warnsignal insbesondere nahe des Endanschlags erhöhen. Eine degressive Veränderung kann die Aufmerksamkeit des Fahrers schon bei Beginn der Ausgabe des Warnsignals direkt auf das Warnsignal lenken.

In einem Ausführungsbeispiel weist die Vorrichtung ferner ein Drehgelenk zum gelenkigen Verbinden des ersten Fahrzeugwagens und des zweiten Fahrzeugwagens innerhalb eines Knickwinkelbereichs auf. Insbesondere kann der Knickwinkelbereich durch mindestens einen Endanschlag (z. B. mechanischer Endanschlag) des Drehgelenks begrenzt sein. Vorzugsweise kann der vorbestimmte Maximalknickwinkelbereich kleiner als der Knickwinkelbereich sein.

Vorzugsweise kann der vorbestimmte Maximalknickwinkelbereich einen ersten Abschnitt für einen ersten Endaschlag des Drehgelenks und einen zweiten Abschnitt für einen zweiten Endschlag des Drehgelenks aufweisen.

In einem weiteren Ausführungsbeispiel umfasst der vorbestimmte Maximalknickwinkelbereich (z.B. der erste Abschnitt und/oder der zweite Abschnitt) einen Bereich kleiner oder gleich 20°, 15°, 10° oder 5° vor Erreichen eines Endanschlags des Drehgelenks. Alternativ oder zusätzlich umfasst der vorbestimmte Maximalknickwinkelbereich (z.B. der erste Abschnitt und/oder der zweite Abschnitt) einen Bereich kleiner oder gleich 30 %, 25 %, 20 %, 15 % oder 10 % des Knickwinkelbereichs vor Erreichen eines Endanschlags des Drehgelenks.

Es ist auch möglich, dass der vorbestimmte Maximalknickwinkelbereich von einem Benutzer (z. B. einem Fahrer des Kraftfahrzeugs) einstellbar ist. Dadurch wird ermöglicht, dass ein benutzerspezifischer Maximalknickwinkelbereich eingestellt wird. Beispielsweise können erfahrene Fahrer des Kraftfahrzeugs einen kleineren Maximalknickwinkelbereich einstellen, sodass sie bei der Fahrt des Kraftfahrzeugs nicht unnötig gestört werden. Im Gegensatz dazu können unerfahrene Fahrer des Kraftfahrzeugs einen größeren Maximalknickwinkelbereich einstellen. Der kleinere Maximalknickwinkelbereich für erfahrene Fahrer kann bspw. einen Bereich von lediglich 5° umfassen, während der größere Maximalknickwinkelbereich für unerfahrene Fahrer einen Bereich von bspw. 10° oder 15° umfassen kann.

In einer Ausführungsform ist die Warnvorrichtung dazu ausgebildet, das veränderliche Warnsignal bei einer Vorwärtsfahrt des Kraftfahrzeugs auszugeben. Insbesondere bei der Verwendung von Omnibussen oder Lastkraftwagen kann es für den Fahrer des Kraftfahrzeugs hilfreich sein, beispielsweise in engen Kurven oder beim Wenden hinsichtlich eines Abstands zu den Endanschlägen gewarnt zu werden.

Alternativ oder zusätzlich kann die Warnvorrichtung dazu ausgebildet sein, das veränderliche Warnsignal bei einer Rückwärtsfahrt des Kraftfahrzeugs auszugeben.

In einer besonders bevorzugten Ausführungsform weist das veränderliche Warnsignal ein akustisches Warnsignal, insbesondere einen akustischen Piepton, auf. Im Gegensatz zu einem visuellen Warnsignal, bei dem die Aufmerksamkeit des Fahrers zum Verstehen der Warnung auf die entsprechende Anzeige gerichtet sein muss, kann der Fahrer durch ein akustisches Warnsignal unabhängig von seiner Blickrichtung gewarnt werden. Ein akustisches Warnsignal kann besonders einfach aufgebaut, verändert und somit vom Fahrer des Kraftfahrzeugs verstanden werden.

In einer Weiterbildung ist eine Lautstärke, eine Dauer, eine Häufigkeit, eine Tonfrequenz und/oder eine Schallquelle des akustischen Warnsignals in Abhängigkeit von der Größe des ermittelten und/oder erfassten Knickwinkels veränderlich.

Beispielsweise kann die Lautstärke des akustischen Warnsignals, die Dauer des akustischen Warnsignals und/oder die Häufigkeit des akustischen Warnsignals bei Zunahme des ermittelten und/oder erfassten Knickwinkels zunehmen. Damit kann der Fahrer des Kraftfahrzeugs bei Annäherung an einen Endanschlag des Drehgelenks mit zunehmender Deutlichkeit vor einem Kontakt mit dem Endanschlag gewarnt werden.

In einer weiteren Ausführungsform weist das veränderliche Warnsignal ein visuelles Warnsignal auf. Beispielsweise kann eine Farbe, eine Größe, eine Anzeigedauer, eine Anzeigehäufigkeit und/oder eine Anzeigeposition des visuellen Warnsignals in Abhängigkeit von der Größe des ermittelten und/oder erfassten Knickwinkels veränderlich sein.

In einer bevorzugten Ausführungsform wird das visuelle Warnsignal in einer Balkenanzeige angezeigt oder ist anzeigbar. Über eine Balkenanzeige kann auf grafisch einfache und dennoch verständliche Weise vor einer Annäherung an und einem Kontakt mit einem Endanschlag des Drehgelenks gewarnt werden.

Es ist auch möglich, dass das visuelle Warnsignal über einen Winkelgeber, der den ermittelten und/oder erfassten Knickwinkel angibt, angezeigt wird oder anzeigbar ist.

In einer weiteren Ausführungsform weist das veränderliche Warnsignal ein haptisches Warnsignal auf. Vorzugsweise kann eine Kraft, eine Dauer, eine Häufigkeit und/oder eine Position des haptischen Warnsignals in Abhängigkeit von der Größe des ermittelten und/oder erfassten Knickwinkels veränderlich sein.

In einer Ausführungsvariante weist die Vorrichtung ein Drehgelenk auf. Das Drehgelenk kann dazu ausgebildet sein, einen Gelenkbusvorderwagen gelenkig mit einem Gelenkbushinterwagen zu verbinden, ein Buszugfahrzeug gelenkig mit einem Busanhänger zu verbinden, eine Sattelzugmaschine gelenkig mit einem Sattelauflieger zu verbinden oder einen ersten Baumaschinenwagenteil gelenkig mit einem zweiten Baumaschinenwagenteil zu verbinden.

In einer weiteren Ausführungsvariante kann das Drehgelenk als ein Knickgelenk insbesondere einer Baumaschine, als eine Königszapfenverbindung insbesondere eines Sattelzugs, als ein Drehschemel insbesondere eines Busanhängerzugs oder als ein Drehkranz insbesondere eines Gelenkbusses ausgebildet sein.

Die Erfindung betrifft auch ein Kraftfahrzeug, insbesondere Nutzfahrzeug, insbesondere Omnibus (z. B. Gelenkbus oder Busanhängerzug), Lastkraftwagen (z. B. Sattelzug) oder Baumaschine (z. B. Knickgelenkbaumaschine), mit einer Vorrichtung wie hierin offenbart.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Ansicht eines Kraftfahrzeugs in einer Draufsicht;
- Figur 2: eine weitere schematische Ansicht des Kraftfahrzeugs in einer Draufsicht;
- Figur 3: eine schematische Ansicht eines beispielhaften Kraftfahrzeugs in Form eines Gelenkbusses;
- Figur 4: eine schematische Ansicht eines beispielhaften Kraftfahrzeugs in Form eines Busanhängerzugs;
- Figur 5: ein erstes beispielhaftes Diagramm für eine veränderliche akustische Warnung gemäß der vorliegenden Offenbarung;
- Figur 6: ein zweites beispielhaftes Diagramm für eine veränderliche akustische Warnung gemäß der vorliegenden Offenbarung; und
- Figur 7: ein Balkendiagramm zur visuellen Anzeige einer veränderlichen Warnung gemäß der vorliegenden Offenbarung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

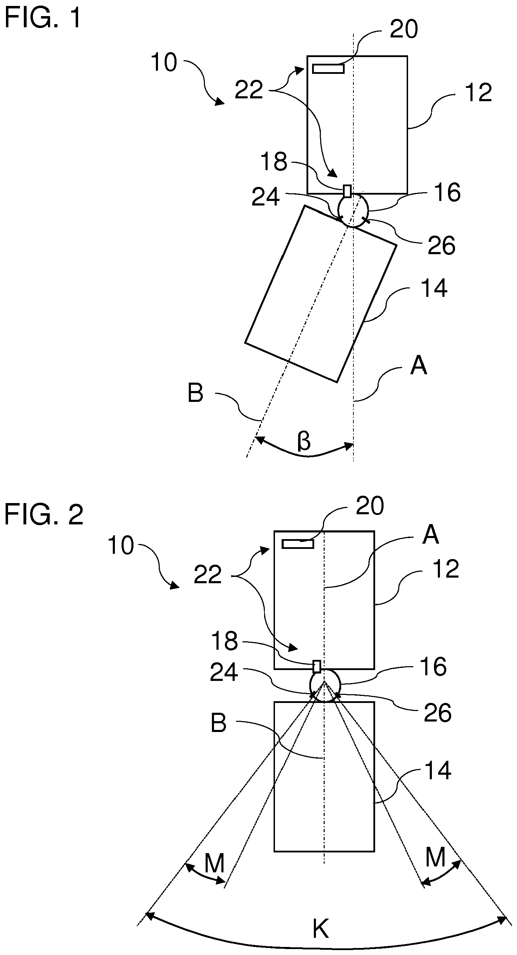

Die Figuren 1 und 2 zeigen ein Kraftfahrzeug 10. Das Kraftfahrzeug 10 weist einen ersten Fahrzeugwagen 12, einen zweiten Fahrzeugwagen 14, ein Drehgelenk (Knickgelenk) 16, einen Winkelsensor 18 und eine Warnvorrichtung 20 auf. Der Winkelsensor 18 und die Warnvorrichtung 20 bilden zusammen eine Vorrichtung 22 zum Überwachen eines Knickwinkels zwischen dem ersten Fahrzeugwagen 12 und dem zweiten Fahrzeugwagen 14.

Der erste Fahrzeugwagen 12 und der zweite Fahrzeugwagen 14 sind mittels des Drehgelenks 16 gelenkig miteinander verbunden.

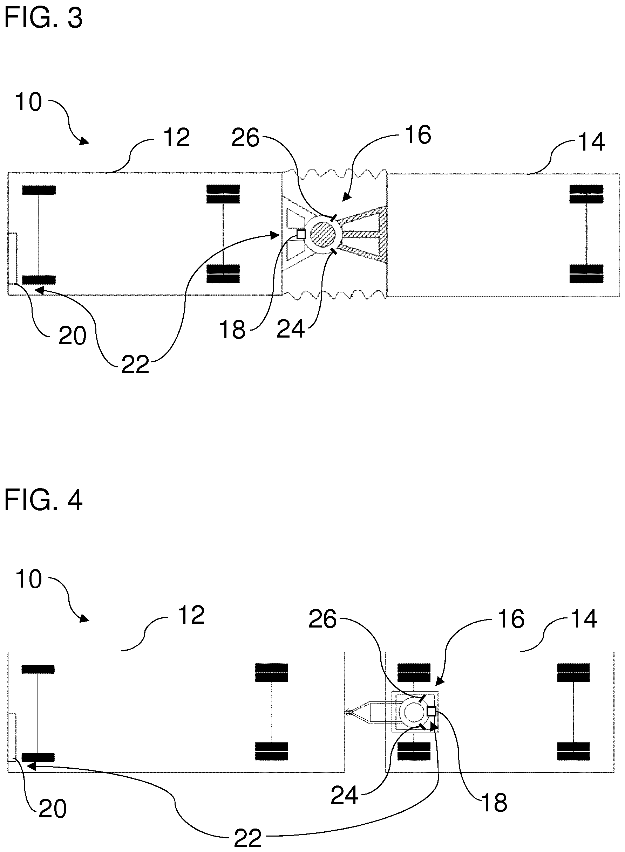

Die Figuren 3 und 4 zeigen Ausführungsbeispiele für das Kraftfahrzeug 10, die Fahrzeugwagen 12 und 14 sowie das Drehgelenk 16.

In Figur 3 ist das Kraftfahrzeug 10 als ein Gelenkbus ausgebildet. Der Fahrzeugwagen 12 ist ein Vorderwagen des Gelenkbusses und der Fahrzeugwagen 14 ist ein Hinterwagen oder Motorwagen des Gelenkbusses. Die Fahrzeugwagen 12 und 14 sind über ein Drehgelenk 16, insbesondere einen Drehkranz, gelenkig miteinander verbunden. Es ist auch möglich, dass ein Gelenkbus mehr als zwei gelenkig miteinander verbundene Fahrzeugwagen aufweist.

In Figur 4 ist das Kraftfahrzeug 10 als ein Busanhängerzug ausgebildet. Der Fahrzeugwagen 12 ist ein Zugfahrzeug des Busanhängerzugs und der Fahrzeugwagen 14 ist ein Busanhänger bzw. Personenanhänger. Die Fahrzeugwagen 12 und 14 sind über einen Drehschemel 16 gelenkig miteinander verbunden. Der Drehschemel 16 ermöglicht eine Drehung einer Vorderachse des Personenanhängers 14 relativ zu einem Rahmen des Personenanhängers 14 zum Lenken des Personenanhängers 14.

Es ist auch möglich, dass das Drehgelenk beispielsweise eine Königszapfenverbindung eines Sattelzugs oder ein Knickgelenk einer Baumaschine, z. B. eines Radladers, ist.

Unter erneuter Bezugnahme auf die Figuren 1 und 2 ist gezeigt, dass sich der erste Fahrzeugwagen 12 entlang einer ersten Längsachse A erstreckt. Der zweite Fahrzeugwagen 14 erstreckt sich entlang einer zweiten Längsachse B. Bei einer Lenkung des Kraftfahrzeugs 10 tritt ein Knickwinkel β zwischen der ersten Längsachse A und der zweiten Längsachse B auf (siehe Figur 1).

Wie in den Figuren 1 bis 4 schematisch dargestellt ist, weist das Drehgelenk 16 einen ersten mechanischen Endanschlag 24 und einen zweiten mechanischen Endanschlag 26 auf. Die mechanischen Endanschläge 24, 26 begrenzen einen Knickwinkelbereich K des Drehgelenks 16 beidseitig (siehe Figur 2). Der Knickwinkel β (siehe Figur 1) kann nur innerhalb des Knickwinkelbereichs K liegen. Beispielsweise kann der Knickwinkelbereich K eines Omnibusses einen Bereich zwischen 0° und ±54° umfassen.

Der Winkelsensor 18 ist dazu ausgebildet, den Knickwinkel β zu erfassen. Der Winkelsensor 18 kann hierzu jegliches geeignetes Messprinzip verwenden, z. B. ein optisches, mechanisches, kapazitives und/oder magnetisches Messprinzip. Es ist auch möglich, dass alternativ oder zusätzlich zum Winkelsensor 18 eine andere Einrichtung zur Ermittlung und/oder Erfassung des Knickwinkels β vorgesehen ist. Beispielsweise kann der Knickwinkel β über eine Auswertung unterschiedlicher Raddrehzahlen der Achsen der Fahrzeugwagen 12 und 14 ermittelt werden. Es ist auch möglich, dass beispielsweise ein Bilderkennungssystem vorgesehen ist, das ein von einem Bilderfassungssystem erfasstes Bild der Fahrzeugwagen 12, 14 und/oder des Drehgelenks 16 auswertet und eine Ermittlung des Knickwinkels β ermöglicht. In einem weiteren Beispiel weisen der erste Fahrzeugwagen 12 und der zweite Fahrzeugwagen 14 jeweils eine Positionsbestimmungsvorrichtung, z.B. eine GPS-Vorrichtung auf. Aus der Auswertung der Signale der Positionsbestimmungsvorrichtungen können Bewegungsvektoren für den ersten Fahrzeugwagen 12 und den zweiten Fahrzeugwagen 14 gewonnen werden. Die Bewegungsvektoren können zum Ermitteln des Knickwinkels β verwendet werden.

Die Warnvorrichtung 20 ist dazu ausgebildet, ein Warnsignal auszugeben. Das Warnsignal kann beispielsweise akustisch, visuell und/oder haptisch sein. Das Warnsignal ist dazu vorgesehen, einen Fahrer des Kraftfahrzeugs 10 beim Lenken des Kraftfahrzeugs 10 bezüglich einer Annäherung an einen der Endanschläge 24, 26 zu warnen. Hiermit kann beispielsweise verhindert werden, dass die Endanschläge 24, 26 erreicht und das Kraftfahrzeug 10 beispielsweise automatisch gebremst wird.

Die Warnvorrichtung 20 gibt ein veränderliches Warnsignal aus, das den Fahrer des Kraftfahrzeugs 10 auf einen noch vorhandenen Abstand zu den Endanschlägen 24, 26 hinweist. D. h., das veränderliche Warnsignal hängt von einer Größe des Knickwinkels β ab. Damit kann der Fahrer des Kraftfahrzeugs 10 einschätzen, ob und wie weit das Kraftfahrzeug 10 beim Lenken weiter eingeschlagen werden kann.

Die Warnvorrichtung 20 kann dazu ausgebildet sein, das veränderliche Warnsignal nur innerhalb eines vorbestimmten Maximalknickwinkelbereichs M (siehe Figur 2) auszugeben. Der Maximalknickwinkelbereich M kann beispielsweise die letzten 20 % bis 30 % des Knickwinkelbereichs K vor den Endanschlägen 24, 26 umfassen. In der gezeigten Ausführungsform ist der Maximalknickwinkelbereich M zweigeteilt, mit einem ersten Abschnitt (links in Figur 2), der dem ersten Endanschlag 24 zugeordnet ist, und einem zweiten Abschnitt (rechts in Figur 2), der dem zweiten Endanschlag 26 zugeordnet ist. Beispielsweise kann der Maximalknickwinkelbereich M Knickwinkel β in einem Bereich zwischen ±46° und ±54 umfassen. Es ist auch möglich, dass der Maximalknickwinkelbereich M von einem Benutzer/Fahrer des Kraftfahrzeugs 10 eingestellt wird.

Außerhalb des Maximalknickwinkelbereichs M gibt die Warnvorrichtung 20 keine Warnung aus. Damit wird der Fahrer des Kraftfahrzeugs 10 nur innerhalb des relevanten Bereichs gewarnt. Eine ungewünschte Gewöhnung des Fahrers des Kraftfahrzeugs 10 an das Warnsignal aufgrund zu vieler Warnungen und/oder Warnungen, die auch bei nur geringen Knickwinkeln β ausgegeben werden, kann somit wirksam verhindert werden. Damit kann, wie gewünscht, die Aufmerksamkeit des Fahrers bei Ausgabe des Warnsignals auf das Warnsignal gelenkt werden.

Die Ausgabe des Warnsignals erfolgt hierbei nicht nur bei einer Rückwärtsfahrt des Fahrzeugs 10, sondern ebenso bei einer Vorwärtsfahrt des Kraftfahrzeugs 10. Insbesondere Lenkmanöver während einer Vorwärtsfahrt des Kraftfahrzeugs 10 in engen Kurven, z. B. im Kreisverkehr, können somit vom Fahrer unter Berücksichtigung der Annäherung an die Endanschläge 24, 26 durchgeführt werden.

In einigen Ausführungsvarianten kann die Warnvorrichtung 20 selbst den erfassten oder ermittelten Knickwinkel β auswerten und ein entsprechendes Warnsignal ausgeben. Es ist allerdings auch möglich, dass der Knickwinkel β von einem Steuergerät (nicht gezeigt) des Kraftfahrzeugs 10 empfangen und ausgewertet wird. Im Rahmen der Auswertung des Knickwinkels wird das Steuergerät als der Warnvorrichtung 20 zugehörig angesehen. Der Begriff "Steuergerät" bezieht sich auf eine Elektronik, die je nach Ausbildung Steuerungsaufgaben und/oder Regelungsaufgaben übernehmen kann.

Wie bereits erwähnt, kann das veränderliche Warnsignal beispielsweise akustisch, visuell und/oder haptisch ausgegeben werden. Die Veränderung des Warnsignals kann hierbei beispielsweise in einer Dauer, Häufigkeit, Position usw. des Warnsignals liegen. Insbesondere kann eine Intensität des veränderlichen Warnsignals bei Zunahme der Größe erfassten Knickwinkels β zunehmen.

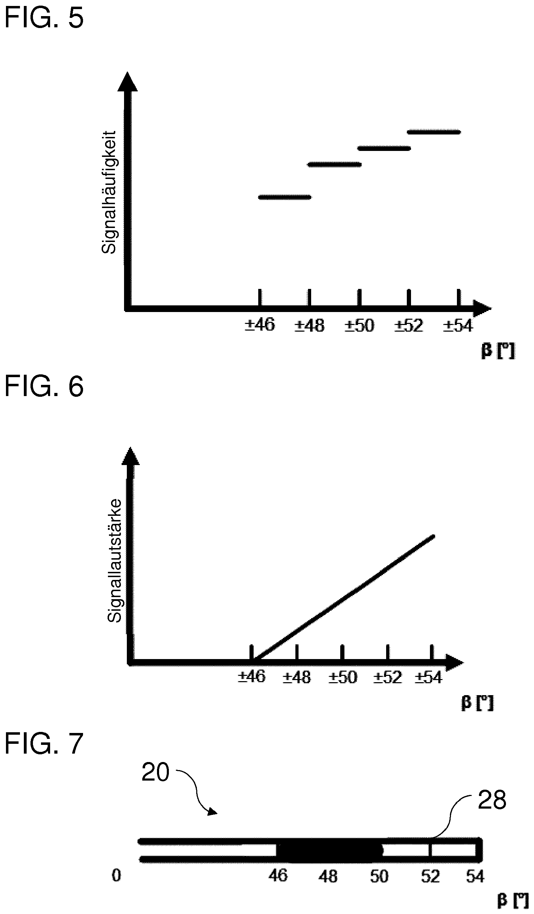

Die Figuren 5 bis 7 zeigen Ausführungsbeispiele für die Warnvorrichtung 20.

Die Figur 5 bezieht sich auf die Ausgabe eines akustischen Warnsignals durch die Warnvorrichtung 20. Hierbei wird eine Häufigkeit der Ausgabe des akustischen Warnsignals in Abhängigkeit von dem Knickwinkel β verändert. Im Einzelnen erhöht sich die Häufigkeit der Ausgabe des akustischen Warnsignals bei Zunahme des Knickwinkels β. Das Warnsignal kann beispielsweise ein Piepton sein. Die Warnvorrichtung 20 kann beispielsweise mit einem PWM-Signal zum Ausgeben des akustischen Warnsignals angesteuert werden.

In dem dargestellten Beispiel erstreckt sich der Knickwinkelbereich K zwischen 0 und ± 54°. In einem Bereich zwischen 0° und ±46° wird kein akustisches Warnsignal ausgegeben. Der Fahrer des Kraftfahrzeugs 10 wird nicht unnötig abgelenkt. Damit erstreckt sich der vorbestimmte Maximalknickwinkelbereich M zwischen +46° und +54° sowie zwischen -46° und - 54°. In jeweils Zwei-Grad-Stufen verändert sich das Warnsignal zwischen +46° und +54° sowie zwischen -46° und -54°. Bei ±54° kann beispielsweise ein Dauerton ausgegeben werden.

Mit anderen Worten gesagt, dass veränderliche Warnsignal bezüglich des Knickwinkels β kann ähnlich zu der Ausgabe eines herkömmlichen Parksensorwarnsignals ausgegeben werden. Das herkömmliche Parksensorwarnsignal kann einen Piepton in Abhängigkeit von einem Abstand zu einem Hindernis bei Annäherung an das Hindernis häufiger ausgeben.

Die Figur 6 bezieht sich ebenfalls auf die Ausgabe eines akustischen Warnsignals durch die Warnvorrichtung 20. Hierbei wird eine Lautstärke der Ausgabe des akustischen Warnsignals in Abhängigkeit von dem Knickwinkel β verändert. Wie beim Beispiel von Figur 5 erstreckt sich der Maximalknickwinkelbereich M zwischen +46° und +54° sowie zwischen -46° und - 54°. Innerhalb des Maximalknickwinkelbereichs M wird die Lautstärke des akustischen Warnsignals linear zu einem Abstand zum entsprechenden Endanschlag 24, 26 erhöht. Ebenso möglich wäre beispielsweise eine progressive Erhöhung oder eine degressive Erhöhung der Lautstärke des akustischen Warnsignals bei Annäherung an die Endanschläge 24, 26.

Die Figur 7 bezieht sich auf die Ausgabe eines visuellen Warnsignals durch die Warnvorrichtung 20. Hierbei wird ähnlich wie in den Ausführungsbeispielen von Figur 5 und Figur 6 nur eine Ausgabe des Warnsignals innerhalb des Maximalknickwinkelbereichs M zwischen ±46° und ±54° bewirkt.

Im Einzelnen weist die Warnvorrichtung 20 eine Balkenanzeige 28 auf. Die Balken der Balkenanzeige 28 füllen sich stetig oder diskret in Abhängigkeit von dem Knickwinkel β. Es ist auch möglich, dass die Balken unterschiedliche Farben (z. B. grün, gelb und rot) aufweisen, um die Aufmerksamkeit des Fahrers bei zunehmender Annäherung an die Endanschläge 24, 26 auf die Warnvorrichtung 20 zu lenken.

Wie bereits erwähnt, kann die Warnvorrichtung 20 auch dazu ausgebildet sein, haptische Warnsignale auszugeben. Beispielsweise kann das haptische Warnsignal als eine veränderliche Vibration des Lenkrads realisiert sein.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die Merkmale des unabhängigen Anspruchs 1 unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration der Warnvorrichtung und/oder der Einrichtung zum Ermitteln und/oder Erfassen des Knickwinkels des unabhängigen Anspruchs 1 offenbart.

### Bezugszeichenliste

- 10: Kraftfahrzeug
- 12: Erster Fahrzeugwagen
- 14: Zweiter Fahrzeugwagen
- 16: Drehgelenk
- 18: Winkelsensor
- 20: Warnvorrichtung
- 22: Vorrichtung zum Überwachen eines Knickwinkels
- 24: Erster Endanschlag
- 26: Zweiter Endanschlag
- 28: Balkenanzeige

- β: Knickwinkel
- A: Erste Längsachse
- B: Zweite Längsachse
- K: Knickwinkelbereich
- M: Maximalknickwinkelbereich

## Patentansprüche

1. Vorrichtung (22) zum Überwachen eines Knickwinkels (β) zwischen einem ersten Fahrzeugwagen (12) und einem zweiten Fahrzeugwagen (14) eines Kraftfahrzeugs (10), insbesondere eines Nutzfahrzeugs, aufweisend:
eine Einrichtung (18), insbesondere einen Winkelsensor, zum Ermitteln und/oder Erfassen des Knickwinkels (β) zwischen dem ersten Fahrzeugwagen (12) und dem zweiten Fahrzeugwagen (14); und
eine Warnvorrichtung (20), die dazu ausgebildet ist, ein Warnsignal auszugeben, das in Abhängigkeit von einer Größe des ermittelten und/oder erfassten Knickwinkels (β) veränderlich ist, wobei das veränderliche Warnsignal nur innerhalb eines vorbestimmten Maximalknickwinkelbereichs (M) ausgegeben wird.

2. Vorrichtung (22) nach Anspruch 1, wobei:
eine Intensität des veränderlichen Warnsignals bei Zunahme der Größe des ermittelten und/oder erfassten Knickwinkels (β), insbesondere linear, progressiv oder degressiv, zunimmt.

3. Vorrichtung (22) nach Anspruch 1 oder Anspruch 2, ferner aufweisend:
ein Drehgelenk (16) zum gelenkigen Verbinden des ersten Fahrzeugwagens (12) und des zweiten Fahrzeugwagens (14) innerhalb eines Knickwinkelbereichs (K), der insbesondere durch mindestens einen Endanschlag (24, 26) des Drehgelenks (16) begrenzt ist, wobei:
der vorbestimmte Maximalknickwinkelbereich (M) kleiner als der Knickwinkelbereich (K) ist.

4. Vorrichtung (22) nach Anspruch 3, wobei:
der vorbestimmte Maximalknickwinkelbereich (M) einen Bereich kleiner oder gleich 20°, 15°, 10° oder 5° vor Erreichen eines Endanschlags (24, 26) des Drehgelenks (16) umfasst; und/oder
der vorbestimmte Maximalknickwinkelbereich (M) einen Bereich kleiner oder gleich 30 %, 25 %, 20 %, 15 % oder 10 % des Knickwinkelbereichs (K) vor Erreichen eines Endanschlags (24, 26) des Drehgelenks (16) umfasst.

5. Vorrichtung nach Anspruch 3 oder Anspruch 4, wobei
der vorbestimmte Maximalknickwinkelbereich (M) von einem Benutzer einstellbar ist.

6. Vorrichtung (22) nach einem der vorherigen Ansprüche, wobei:
die Warnvorrichtung (20) dazu ausgebildet ist, das veränderliche Warnsignal bei einer Vorwärtsfahrt des Kraftfahrzeugs (10) auszugeben; und/oder
die Warnvorrichtung (20) dazu ausgebildet ist, das veränderliche Warnsignal bei einer Rückwärtsfahrt des Kraftfahrzeugs (10) auszugeben.

7. Vorrichtung (22) nach einem der vorherigen Ansprüche, wobei:
das veränderliche Warnsignal ein akustisches Warnsignal, insbesondere einen akustischen Piepton, aufweist.

8. Vorrichtung (22) nach Anspruch 7, wobei:
eine Lautstärke, eine Dauer, eine Häufigkeit, eine Tonfrequenz und/oder eine Schallquelle des akustischen Warnsignals in Abhängigkeit von der Größe des ermittelten und/oder erfassten Knickwinkels (β) veränderlich ist.

9. Vorrichtung (22) nach Anspruch 8, wobei:
die Lautstärke des akustischen Warnsignals, die Dauer des akustischen Warnsignals und/oder die Häufigkeit des akustischen Warnsignals bei Zunahme des ermittelten und/oder erfassten Knickwinkels (β) zunimmt.

10. Vorrichtung (22) nach einem der vorherigen Ansprüche, wobei:
das veränderliche Warnsignal ein visuelles Warnsignal aufweist; und
eine Farbe, eine Größe, eine Anzeigedauer, eine Anzeigehäufigkeit und/oder eine Anzeigeposition des visuellen Warnsignals in Abhängigkeit von der Größe des ermittelten und/oder erfassten Knickwinkels (β) veränderlich ist.

11. Vorrichtung (22) nach Anspruch 10, wobei:
das visuelle Warnsignal in einer Balkenanzeige (18) angezeigt wird oder anzeigbar ist.

12. Vorrichtung (22) nach einem der vorherigen Ansprüche, wobei:
das veränderliche Warnsignal ein haptisches Warnsignal aufweist; und
eine Kraft, eine Dauer, eine Häufigkeit und/oder eine Position des haptischen Warnsignals in Abhängigkeit von der Größe des ermittelten und/oder erfassten Knickwinkels (β) veränderlich ist.

13. Vorrichtung (22) nach einem der vorherigen Ansprüche, ferner aufweisend:
ein Drehgelenk (16), das dazu ausgebildet ist, einen Gelenkbusvorderwagen gelenkig mit einem Gelenkbushinterwagen zu verbinden; oder
ein Drehgelenk (16), das dazu ausgebildet ist, ein Buszugfahrzeug gelenkig mit einem Busanhänger zu verbinden; oder
ein Drehgelenk (16), das dazu ausgebildet ist, eine Sattelzugmaschine gelenkig mit einem Sattelauflieger zu verbinden; oder
ein Drehgelenk (16), das dazu ausgebildet ist, einen ersten Baumaschinenwagenteil gelenkig mit einem zweiten Baumaschinenwagenteil zu verbinden.

14. Vorrichtung (22) nach einem der vorherigen Ansprüche, ferner aufweisend:
ein Drehgelenk (16), das als ein Knickgelenk insbesondere einer Baumaschine, als eine Königszapfenverbindung insbesondere eines Sattelzugs, als ein Drehschemel insbesondere eines Busanhängerzugs oder als ein Drehkranz insbesondere eines Gelenkbusses ausgebildet ist.

15. Kraftfahrzeug (10), insbesondere Nutzfahrzeug, insbesondere Omnibus, Lastkraftwagen oder Baumaschine, mit einer Vorrichtung (22) nach einem der vorherigen Ansprüche.
